**Europäisches Patentamt**

**European Patent Office**

**Office européen des brevets**

(11) Publication number: **0 126 174**
**B1**

## (12) EUROPEAN PATENT SPECIFICATION

(45) Date of publication of patent specification: **04.10.89**

(51) Int. Cl.⁴: **B 22 D 17/32,** B 29 C 45/00

(21) Application number: **83105037.2**

(22) Date of filing: **20.05.83**

(54) **Process for monitoring and controlling intermittently working molding and casting devices and apparatus for performing said process.**

(43) Date of publication of application:
**28.11.84 Bulletin 84/48**

(45) Publication of the grant of the patent:
**04.10.89 Bulletin 89/40**

(84) Designated Contracting States:
**AT BE CH DE GB LI LU NL SE**

(56) References cited:
**EP-A-0 018 551**
**DE-A-2 615 445**
**DE-A-3 142 811**
**US-A-3 945 255**
**US-A-3 945 255**
**US-A-4 335 778**

**MODERN PLASTICS INT., vol. 9, no. 3, March
1979, pages 13-15, Lausanne, CH**

(73) Proprietor: **Mickowski, John**
**127 Main Street**
**Franklin New Jersey 07416 (US)**

(72) Inventor: **Mickowski, John**
**127 Main Street**
**Franklin New Jersey 07416 (US)**

(74) Representative: **Kinzebach, Werner, Dr.**
**Patentanwälte Reitstötter, Kinzebach und
Partner Sternwartstrasse 4 Postfach 86 06 49
D-8000 München 86 (DE)**

Courier Press, Leamington Spa, England.

## Description

The invention relates to a process for monitoring the process parameters of a molding or die casting operation for use in controlling intermittently working molding and casting devices having linear reciprocating means for intermittently transferring raw material under control of at least the pressure during operation and in which data corresponding to the position of the reciprocating means and the pressure developed by the reciprocating means are generated.

Various industrial processes employ reciprocating machinery having a linear stroke to implement the process. In die casting and plastic molding, for example, the linear reciprocating device is an hydraulic cylinder used for loading raw material into the die or mold respectively. In die casting, molten metal is forced into the die from the hydraulic cylinder by a piston type plunger or ram displaced over a linear stroke under controlled operating conditions of pressure and velocity. Research in die casting has achieved a level of sophistication whereby the proper injection speeds, pressure and temperatures required for optimum operation for any given machine can be theoretically calculated. To satisfy the calculated conditions, the operation must be carried out within narrow ranges of settings for each of the critical process parameters. Variation in one or more of the process parameters will affect the performance of the other parameters on the process and will alter the production rate and affect the yield of the product produced. To optimize the production output the process parameter settings are adjusted over a series of production runs until a product with desired characteristics and production yield is obtained. Since the events which affect the production cycle occur much too quickly for human observation it was necessary, heretofore, for operating personnel to make subjective judgements in adjusting process parameters in a production run frequently resulting in high scrap rates. The trial and error technique commonly used heretofore also required more raw material than necessary in getting a given required production output. Moreover, because of the inability to control and adjust the process parameters accurately, the design of the article produced typically had to be made with more material than necessary for functional or strength considerations simply to permit an acceptable yield.

Accordingly, a need exists for a diagnostic instrumentation system which can readily be applied to the process machinery to monitor and record objective measurements of machine performance during an actual production cycle. The objective measurements should represent machine operational data which will provide technical personnel with the means to make appropriate adjustments to maintain optimum process integrity. Prior art instrumentation claiming to satisfy this need are based upon the use of high speed analog graphic plotters which typically use expensive ultraviolet sensitive photographic paper in combination with transducers and signal conditions designed to collect machine data and display it. One of the major disadvantages to the use of a graphic plotter is that its output is a graphical display of the given parameter under observation versus time. A time display is difficult to interpret and requires sophisticated expertise to derive and calculate quantitative values for the critical parameters affecting the process.

Not only is the interpretation subject to error but it does not provide readily apparent information from which machine adjustments may be made in the next production cycle. Another significant disadvantage is that the oscilloographs must be adjusted to accomodate the transducers used on a specific machine and must be calibrated for each different type of transducer. Also, because of the high speed of the paper travel of the recorder it is necessary for a technical person to be constantly attentive of the oscillograph so as to minimize the waste of the expensive paper.

US—A—39 45 255 describes a method and an apparatus for monitoring a process which involves a plurality of parameters, comprising the steps of monitoring at least two of the parameters of said process which are desired to have a prescribed relationship to each other; forming a curve which graphically represents the actual relationship of said parameters to each other; comparing the thus obtained curve to a standard curve which represents the desired relationship of said parameters; and producing a signal in the event of a deviation between said curves. But this system is *not* a diagnostic system *nor* can it be. Namely, there are no means for forming and/or storing data values to form a current profile in real time for comparison purposes which is necessary for monitoring systems. Moreover, the master graph is not a visual display which is also necessary for monitoring systems. The graphical plot obtained by the known system shows the mechanical relationship between the piston and pressure without indication of pressure against the selected stroke position in real time.

In the known system the plastic viscosity of the raw material where to change from one run to another, i.e., between successive operations or piston strokes, the change would not be detected, since no recognition of velocity is indicated or even suggested. Accordingly, the known system will not provide any meaningful process control by monitoring since the only variable it detects is pressure. Hence, the system according to the cited document has no value for purposes of the monitoring process which is necessary for a system-diagnosis.

Finally, the system according to the aforementioned document is also incapable of getting an intelligent output signal once the maximum forward position of the piston is reached. Accordingly, no information is generated beyond this point.

The DE—A—31 42 811 relates to an arrangement for controlling the casting-piston-movement in the casting mould of a pressure casting machine, having at least a first valve arrangement to control the medium flow directed to the casting mould during the first and/or second phase and having a second valve arrangement to control the medium flow during the third phase and having a control device to control the valve arrangements in relation to at least one casting parameter, which is characterized in that a position transducer is provided for currengly measuring of the stroke length of the casting piston and that the control device has memory means for storing the predetermined course of the velocity of the casting piston as a function of the stroke length, having a comparator for comparing the real stroke length measured by the position transducer with the predetermined value of the stroke length deriving from the predetermined velocity of the casting piston and having a control device to control the valve arrangement as a function of the signals produced by the comperator.

The control device provides display means for monitoring the analog-data of the velocity and of the stroke length of the casting piston and the pressure as a function of the time.

This arrangement is not suitable to measure at least two parameters as a function of the position of the casting piston along its stroke length until the velocity reaches a predetermined minimum value and to continue to generate data of velocity, pressure and temperature after the casting piston velocity is zero and the phase of solidification begins.

Starting from the above state of the art it is the task of the present invention to avoid the said disadvantages and to provide a process and an apparatus for performing said process by which the time and costs for setting up a molding or casting system to produce a new product is minimized.

This task is solved by a process for monitoring the process parameters of a molding or die casting operation for use in controlling intermittently working molding and casting devices having linear reciprocating means for intermittently transferring raw material under control of at least the pressure during operation and in which data corresponding to the position of the reciprocating means and the pressure developed by the reciprocating means and the pressure developed by the reciprocating means are generated characterized in that the process comprises the steps of

a) dividing the stroke length of the linear reciprocating means into a predetermined number of incremental positions;

b) storing the pressure data generated at each such incremental position;

c) deriving the velocity of the reciprocating means at each incremental position and storing the derived velocity value as a function of each incremental position;

d) visually displaying the stored data corresponding to pressure and velocity as a function of the position of reciprocating means at each incremental position along its stroke length until the velocity reaches a predetermined minimum level to form a stored master visual display profile of each of such data as a function of the position of the reciprocating means;

e) repeating the sequence of steps to form a second current visual display profile of data for a second operation; and

f) comparing the second current visual display profile to the master visual display profile to analyze for parameter variations between operations.

The task of the present invention is further solved by an apparatus for performing a process according to one of the previous claims, comprising a position transducer (4, 5) measuring the stroke position of a reciprocating device and connected to a mikrocomputer (1) for processing velocity-data of the reciprocating device, memory means (7) for storing such data and graphical display means (6) for monitoring process parameters as the velocity-data characterized in that the position transducer is a velocity position transducer (4, 5) deriving the velocity of the reciprocating device at each incremental position and connected to non-volatile memory means (7) for storing one or more velocity profiles (14) of the reciprocating device as one or more master traces (14a) and that the graphical display means are CRT means displaying one of the said master traces (14a) readable back from said non-volatile memory means (7) and superposing thereon the actual velocity profile (14) measured by the velocity position transducer (4, 5) and that it further comprises a pressure transducer (2) for providing an output pressure signal corresponding to the pressure of said reciprocating device in response to stroke position and wherein said microcomputer (1) one is reading each output pressure signal in intervals corresponding to incremental distances of stroke length and for collecting each output pressure signal to form a profile of pressure as a funciton of stroke length until said velocity drops to below a predetermined level for continuing said profile as a function of time.

Further, different embodiments of the present invention can be derived from the subclaims and the following description.

The data analysis and display system of the present invention provides a graphic display of one or more process parameters for controlling the operation of a reciprocating device having a linear stroke as a function of stroke position. In a die casting operation the reciprocating device would be representative of the hydraulic cylinder and piston ram for injecting raw materal into the die. The data analysis and display system of the present invention would automatically generate a profile of the critical operational parameters, viz., velocity and pressure as a function of ram position along its linear stroke. This permits dramatically reduced set up time and readily provides information for adjustment of the variable paratmeters within precise limits to assure maximum production quality and performance.

It is the principal object of the present invention to provide a data analysis and display system for generating a profile of at least one process parameter in the control of a reciprocating device having a linear stroke as a function of stroke position.

It is a further object of the present invention to provide a data analysis and display system for monitoring a reciprocating device in an industrial process through transducers adapted to provide automatic zero offset calibration adjustment.

It is an even further object of the present invention to provide a data analysis and display system adapted to store in a non-volatile memory of a microcomputer a profile recording of a master trace for a given control parameter so as to provide for the super-position of a current profile of such control parameter upon the master trace.

It is yet a further object of the present invention to provide a data analysis and display system for generating on a cathode ray tube the profile of at last one process parameter affecting the operation of a reciprocating device having a linear stroke as a function of stroke position and for generating a cursor for providing quantitative information of such process parameter at any cursor position along said profile.

Other objects and advantages of the present invention will become apparent from the following detailed description of the apparatus according to the invention when read in conjunction with the accompanying drawing of which:

Figure 1 is a block diagram of the data analysis and display system of the present invention;

Figure 1A is a pictorial representation of a typical profile display of velocity versus position generated in accordance with the present invention for a die casting operation;

Figure 2 shows the pressure intermediate circuit between the microcomputer of Figure 1 and the pressure transducer;

Figure 3 shows the temperature interface circuit between the microcomputer of Figure 1 and the temperature transducer;

Figure 4 shows the position transducer interface circuit between the microcomputer of Figure 1 and the position transducer;

Figure 5 is a flow diagram for the microprocessor of Figure 1 corresponding to the start function;

Figure 5A is a flow diagram identifying the software functions for the program selection "Collect Data" in the flow diagram of Figure 5;

Figure 6 is another flow diagram identifying the software functions for the "Graphics" program selection in the flow diagram of Figure 5;

Figure 6A is a flow diagram subroutine for performing the "Plot" function in the flow diagram of Figure 6;

Figure 6B is a flow diagram subroutine for performing the "Current", "Master" and "Plot Variable" sbroutines of the Plot function of Figure 6A;

Figure 6C is a flow diagram subroutine for performing the "Cursor" subroutine for the Cursor function of Figure 6;

Figure 6D is a flow diagram subroutine for performing the "Files" function in the flow diagram of Figure 6;

Figure 6E is a flow diagram subroutine for performing the "Get Old" and "Make New" subroutines of the Files function of Figure 6C; and

Figure 7 is a flow diagram for carrying out the ENTER/EDIT PARAMETER SHEETS function in the flow diagram of Figure 6.

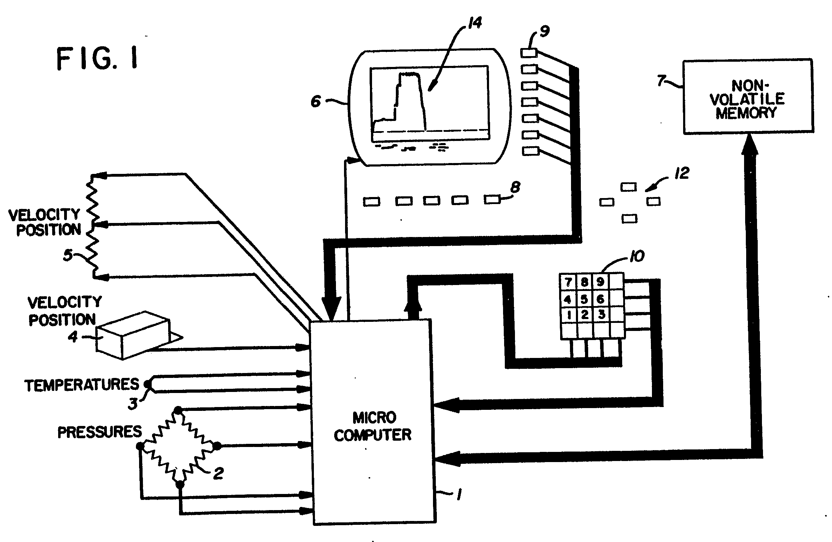

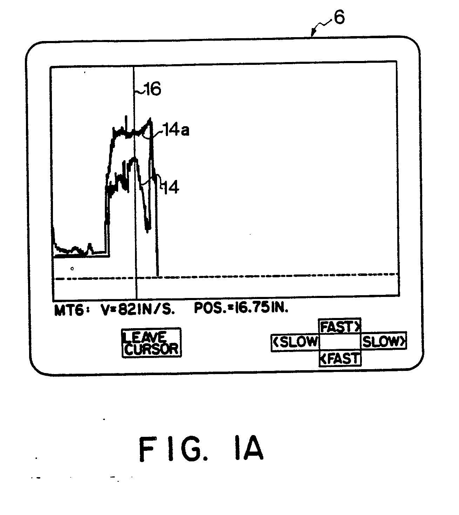

Referring now in particular to Figure 1 and Figure 1A inclusive which diagrammatically illustrate the data analysis and display system of the present invention and a typical CRT (cathode ray tube) velocity profile generated by the system of the present invention for a die casting machine.

The basic building blocks of the data analysis and display system of the present invention comprise a microcomputer 1 of any conventional design, including a conventional non-volatile memory 7, groups of program selection and function keys 8, 9 and 12 and a numeric keyboard 10; a plurality of transducers 2, 3, 4 and 5 respectively and a conventional cathode ray tube 6 hereinafter referred to as a CRT.

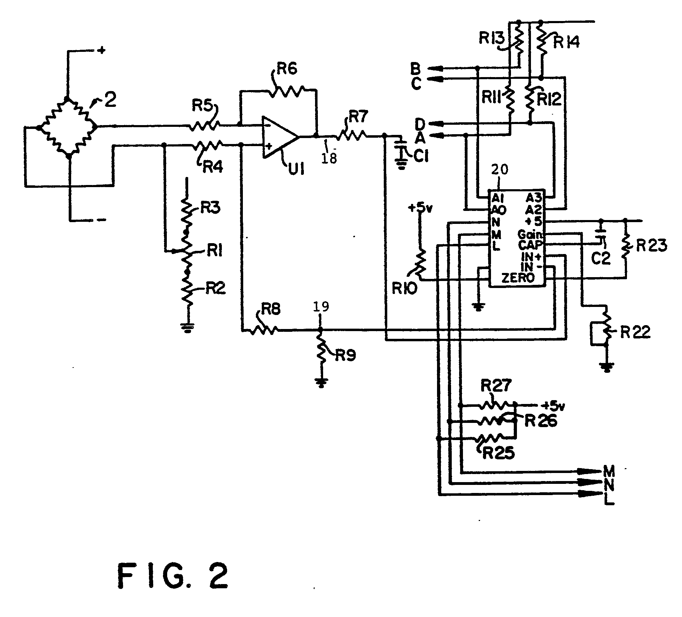

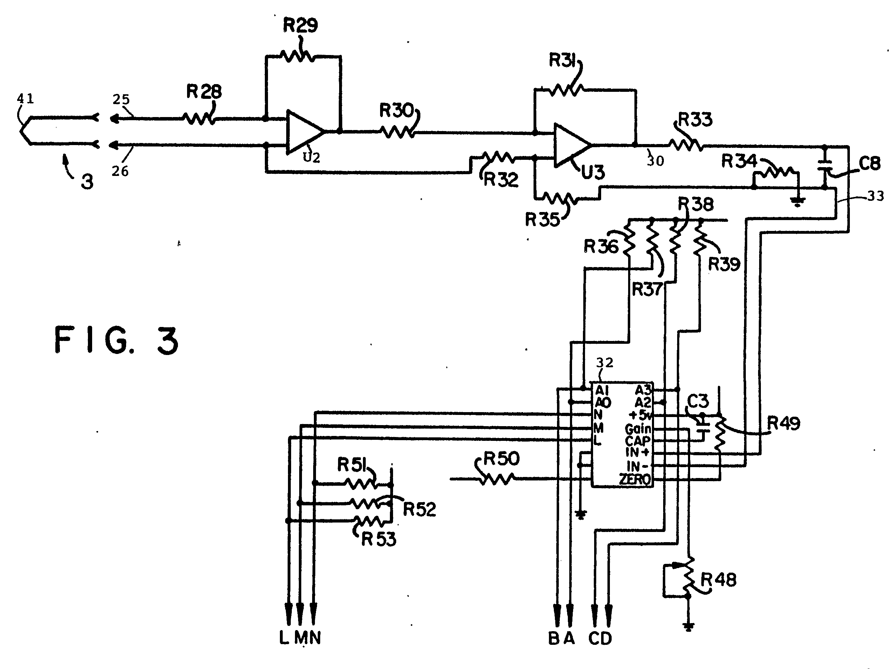

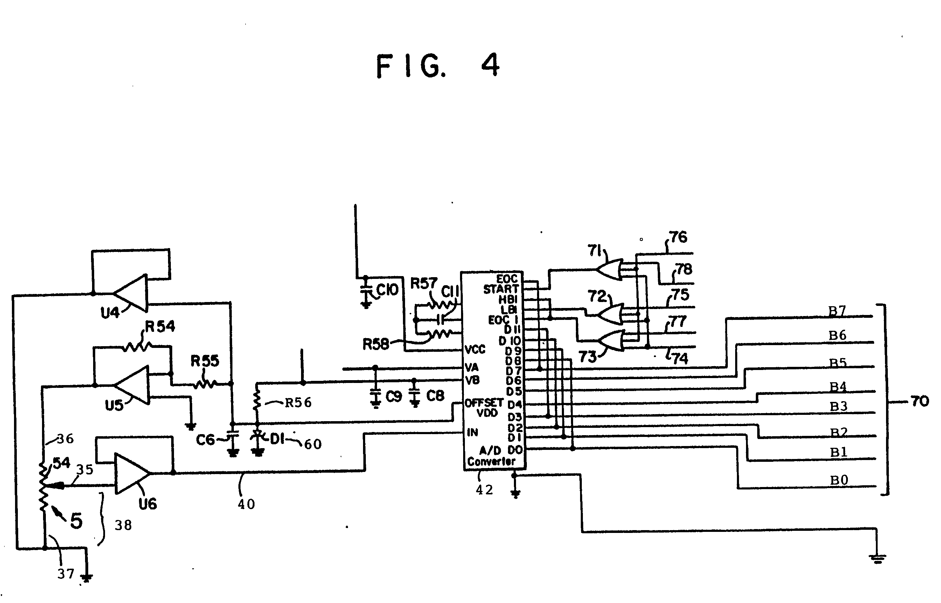

The transducers 2, 3, 4 and 5 represent pressure, temperature and velocity position transducers respectively. Transducers 4 and 5 represent alternative transducers for providing velocity position data to the microprocessor. Transducer 4 is a conventional digital type transducer connected to the die casting machine to sense the pulses generated during machine production in response to each incremental movement of the reciprocating device (not shown) over its linear stroke. The output is in a binary coded decimal format for direct reading by the microcomputer 1. The transducer 5 is a linear potentiometer having an interface circuit as will be discussed in more detail with reference to Figure 4. The microcomputer 1 may interface to either the digital velocity position transducer 4 or the linear potentiometer velocity position transducer 5. The temperature transducer 3 is a temperature thermocouple having an interface circuit as will be discussed in more detail with reference to Figure 3 whereas the pressure transducer 2 is a conventional strain gage type pressure transducer in a bridge configuration with an interface circuit as will be discussed in more detail with reference to Figure 2.

Each of the transducers 2, 3, 4 and 5 collect data consisting of velocity, temperature and pressure as a function of stroke position during a production cycle. The production cycle for a die casting or plastic molding operation is defined for purposes of the present invention as the stroke and corresponds to the motion of the injection ram (not shown) which injects either metal into the die or plastic into a mold respectively. The stroke length represents the total displacement distance of the injection ram in the hydraulic cylinder for a single produciton cycle.

The conventional microcomputer 1 is connected to a conventional CRT 6 for displaying a profile representative of the data collected by the transducers 2, 3, 4 or 5 in accordance with programmed instructions corresponding to the flow diagrams 5, 6, 6A—6F and 7 respectively as will be discussed in more detail hereafter. Any conventional software program format suitable for use with the microcomputer 1 may be used in the preapration of a program to fulfill the flow diagram requirements. The program itself does not form a part of the present invention and may readily be prepared by any skilled programmer from the flow diagrams.

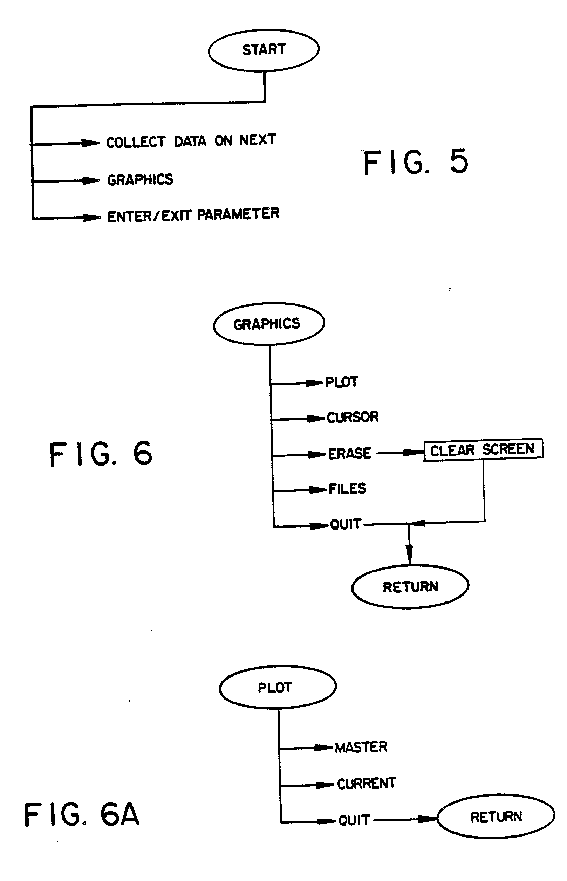

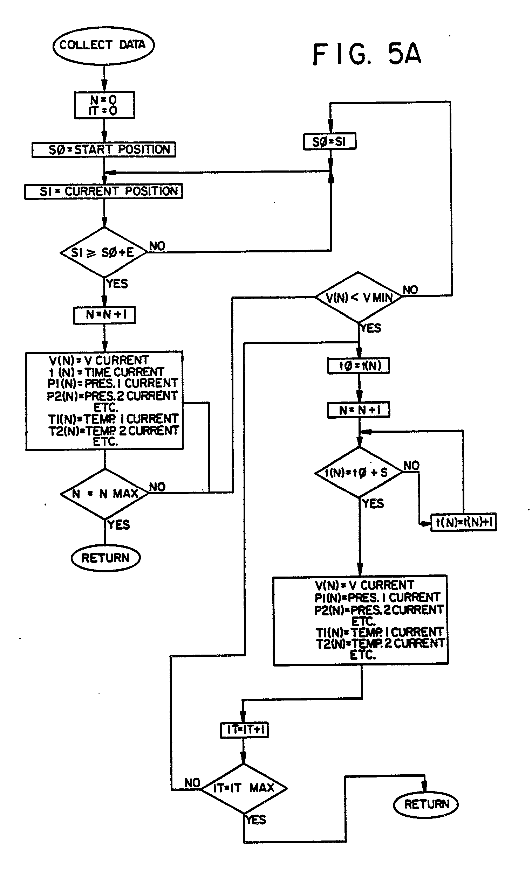

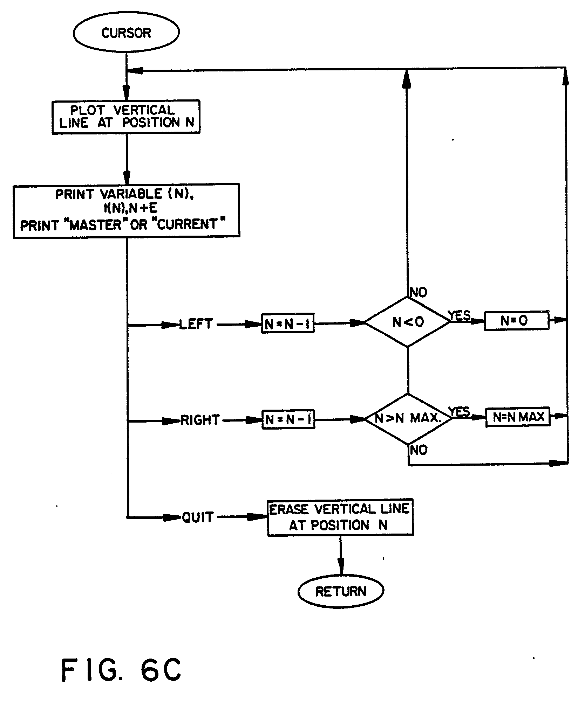

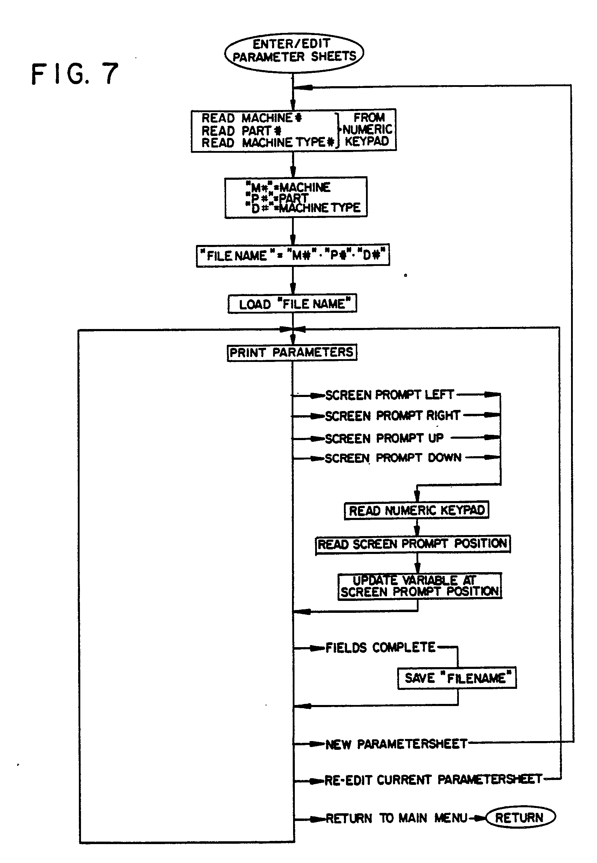

An illustrated display of a typical profile 14 representatives of the velocity of the injection ram for a production cycle as a function of stroke position, i.e., the position of the reciprocating injection ram along the stroke length, is shown on the CRT 6. A further illustrative display shown two velocity traces superimposed for comparison is shown in Figure 1A. The microcomputer 1 is of any commercially available type which can generate a cursor. The position of the cursor 16 in Figure 1A is controlled by software following the flow diagram subroutine for the cursor to be discussed hereafter in connection with Figure 6C and Figure 7. The cursor 16 is adjustable over the stroke length and provides specific parameter information corrsponding to its location on the display thereby permitting the observer to readily compare parameter values between the superimposed traces at any stroke position. One of the superimposed traces may represent a "master" profile defined as an idealized or acceptable profile and may simply represent a previously recorded profile. A master profile is used for comparison purposes with a "current" profile. A current profile is defined as a profile trace formed on the CRT from data received by the microprocessor from one of the transducers in response to a current production cycle. The master profile is stored in the non-volatile memory 7. Any number of master profiles may be recorded and stored in the non-volatile memory 7 so as to constitute a library of master profiles. A master profile is stored at any address in memory 7 identified by the operator through the use of the numeric keyboard 10. By providing this ability to superimpose master profiles over a current profiles, a non-technically trained person can readily distinguish between a master trace identifying a production run classified as acceptable or good and the current production run representing the current profile it also becomes readily apparent to the operator where and to what extent adjustment may be necessary to conform subsequent produciton runs to the master trace. This is primarily attributable to the fact that the trace is a function of position and not time. Individual program selection and function control is provided by groups of push buttons 8, 9 and 12. Each individual button in Group 9 is assigned a program selection whereas the group of push buttons 8 and 12 are assigned individual function selections corresponding to the function selections in the flow diagrams. The numeric keyboard 10 additionally provides for the numeric entry of upper and lower limits for ech imput parameter so as to define the acceptable range of such parameter for proper operation of the machine. In addition, the numeric keyboard 10 may be used to enter data corresponding to a machine number, ram plunger diameter and production cycle job number which collectively are used for the file identification for each master trace stored in the non-volatile memory 7.

Figure 2 shows the pressure interface circuit between the microcomputer 1 and the pressure transducer 2. The pressure transducer 2 is of a conventional bridge type with one leg of the bridge being adjustable and varying in a conventional fashion in response to the amount of resistance to movement of the reciprocating device (not shown). Resistors R1, R2 and R3 form a zero offset adjustment network to cancel out the zero offset of the pressure transducer 2 so as to provide a zero differential input to the operational amplifier U1. Resistors R4, R5, R6, R7 and R9 form an appropriate feedback network to provide an output 18 of predetermined gain relative to the signal 19. RC network combnation R7 and C1 reduce the noise content from the pressure transducer 2. Integrated circuit 20 is a commercially available analog to digital converter for converting the analog signal to a digital format preferably in BCD form. The resistors R11, R12, R13, R14, R25, R26 and R27 are pull up resitors for providing signals on lines AD, CB and MNL which are connected to provide the microcomputer 1 with continuous data corresponding to the pressure at the instant of time selected to be read by the microcomputer. The microcomputer 1 reads the pressure data in increments of time corresponding to the incremental displacement of the reciprocating devife (not shown) over the stroke length to provide a profile of pressure versus stroke position. Resistors R16 and R23 are selected to cancel the zero offset of the analog to digital converter 20. Capacitor C2 is an integrating capacitor used by converter 20 during data conversion. Register R22 is used to adjust the gain of the converter 20 to result in a calibrated output.

Figure 3 shows the temperature interface circuit between the temperature transducer 3 and the microcomputer 1. Thermocouple 41 is adapted to be coupled to the reciprocating device to provide a temperature signal corresponding to the temperature in the reciprocating device as a function of stroke position. The thermocouple 41 is connected through lead lines 25 and 26 to a conventional operational amplifier U2. Resistors R28 and R29 provide the feedback resistors for setting the gain of the first stage of amplification. A second stage of amplification is provided by a convention operational amplifier U3 in conjunction with its feedback resistor network R30, R31, R32, R35 and R34. The output 30 from the second stage of amplification is fed relative to the potential on line 33 to a conventional analog to digital converter 32 in a manner similar to that in the interface circuit for the pressure transducer 2. The output from the analog to divital converter 32 is provided on the same lines LM N, AB, CD as for the pressure transducer circuit in Figure 2.

Figure 4 shows the linear potentiometer interface circuit between the linear potentiometer 5 and the microcomputer 1. The linear potentiometer 5 may be readily mounted to the die casting machine with its variable wiper arm 35 connected to move with the reciprocating device. Accordingly, the position of the wiper arm 35 is directly proportional to the position of the reciprocating device along the stroke length. Since the velocity of the reciprocating device is equal to distance divided by time; the velocity is readily determined relative to each incremental stroke position. The stroke length may be divided into any number of increments with the velocity representing the differential of each reading with respect to time.

Linear potentiometer 5 is connected to the interface circuit operational amplifier U4, U5 and U6 respectively. Operational amplifiers U4 and U5 serve to apply positive and negative reference voltage levels across the opposite ends 36, 37 of the potentiometer 5. The operational amplifier U6 amplifies the signal output 38 from the wiper arm 35. Operational amplifier U4 and U6 are connected in a conventional unity gain configuration. Resistors R54 and R55 form a unity gain feedback circuit which generates a positive reference voltage on end 36 of potentiometer 5 equal in magnitude to the negative reference voltage developed by zenor diode 60 from a negative power supply voltage −V through resistor R56. Accordingly, the output 40 of the operational amplifier U6 is automatically adjsuted against drift in power supply voltage. The output 40 is connected to a conventional analog to digital converter 42 such as Beckman AD7556. The data presented on the data bus lines Bo through B7 are connected to the microcomputer 1. The A to D converter 42 generates a twelve bit digital signal corresponding to the analog signal 40. Or gates 71, 72 and 73 control the conversion of data and the interrogation of the twelve bit output D0 through D11 of the A to D convertor 42. Each time the microcomputer takes a reading the enable conversion line 74 goes to the zero logic state. At the same time, address lines 75 and 76 are set to a logical zero. When all three of the signals are logical zero's the output of Or gate 72 is a logical one thereby enabling the low byte labeled LBI in the A to D converter 42. This causes the lower significant bits D0 through D7 to be impressed upoon the data bus lines B0 to B7. After reading the lower eight bits, the microcomputer 1 then interrogates the upper four bits D8 to D11 by setting the enable conversion line to a zero logic state while setting address lines 77 and 76 to logical zero. This combination causes the output of Or gate 73 to go to a logical one which, in turn, enables the end of Conversion Signal Eocl and the high byte HBI causing the upper significant bits D8 to D11 to be impressed upon the data bus lines

B0 to B3. The conversion of data is initiated when the microcomputer sets the enable conversion line 74 to a zero logic state and sets the address lines 78 and 76 to logical zero. This causes the output of Or gate 71 to go to a high state thereby impressing a start signal to the start input of the A to D converter 42 for starting another conversion cycle. By continuously repeating the start conversion and reading sequence in predetermined intervals corresponding to incremental distances the microcomputer 1 knows at all times what the position of the ram is along the machine stroke. Upon collecting the position data as a function of time it need only perform an algorithm representing a simple mathematical quotient of distance and time to convert the position data to velocity data. Accordingly, a profile can be generated corresponding to velocity versus position as well as velocity versus time or a combination of both. The latter is significant in that certain periods may exist when a momentary time display would be beneficial. In die casting this is true at approximately the end of the stroke where the velocity of the ram approaches zero. Accordingly, a combination display is particularly useful for the pressure profile in a die casting operation over the final stoke length known to those skileld in the art as the "biscuit" length.

Figure 5 illustrated the flow diagram for start up of the microcomputer 1. Upon depressing the start function key three program selections identified as Collect Data, Graphics and Entry/Edit Parameter sheets become selectable. A program is selected by depressing one of the dedicated function keys corresponding to the program selection. Any one of the keys in the function key groups 8, 9 and 12 may be assigned the appropriate functions.

Figure 5A shows the flow diagram for the program selction "Collect Data". The letter (N) designates each incremental position at which data is to be collected over the stroke length. The stroke length may be divided into any fixed number of incremental data collection points preferably corresponding to the screen increments for the particular microcomputer being used. At each data collection point a time reading is taken with the number of the data points designated IT. The start position is labeled S0 at time IT 0 whereas the current position of the injection ram along the stroke length is designated SI. The algorithmic statement SI $\geq$ S0 + E is met only when the ram has advanced from the start position a fixed distance E representing the desired incremental spacing between the incremental positions. Once this is met the incremental positions N is advanced by one and a reading is taken from the transducers 2, 3, 4 or 5 of current velocity, current temperature, and current pressure. The microcomputer clock is used for generating a time frame.

The program of Figure 5A provides for consecutive readings at each incremental position until the assigned number of incremental positions reaches maximum. In die castng near the end of the operation when the ram approaches the end of the stroke the velocity will drop to a plateau level of slightly above zero at which time it is preferred to continue readings as a function of time. Accordingly, as shown in Figure 5A, a time frame is established for the remaining number of incremental positions with t0 representing the starting time for further consecutive readings as a function of time. As soon as the current tine t(N) plus a predetermined time increment "δ" is reached representing a time data increment IT within the established time frame, from t0 to IT maximum, the next reading is taken. At such instant the time data increment IT is advanced by one and further readings are taken until the increments of time IT equals the completion of the established time frame.

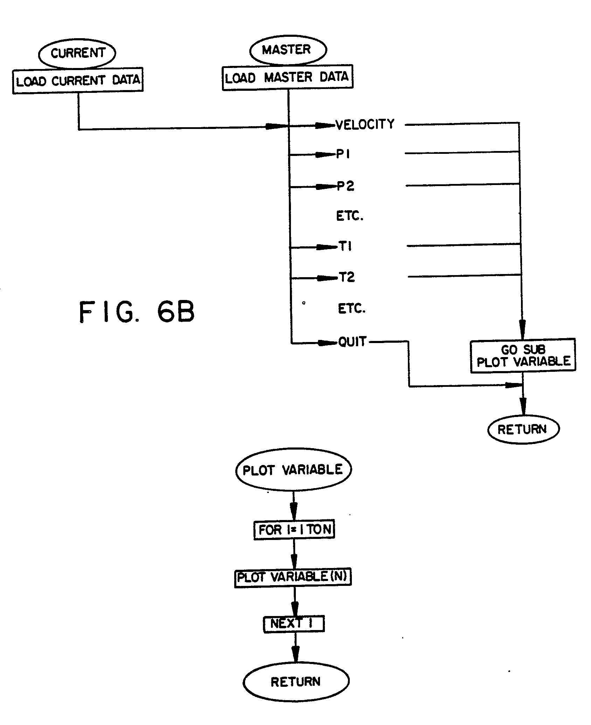

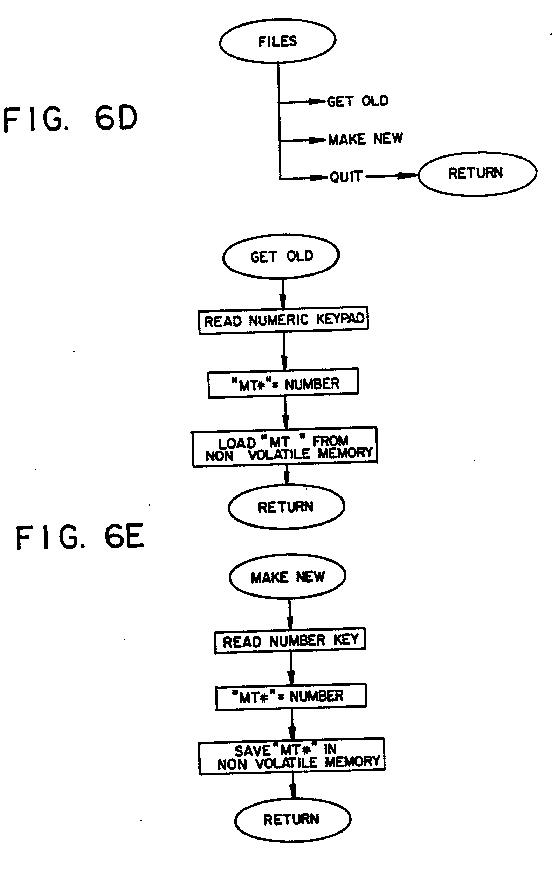

Figure 6 shows the flow diagram for the program Selection Graphics. With this program selection the operator is given a further choice of the subordinated functions Plot, Cursor, Frame, Files and Quit. Any one of these functions become available upon depression of one of the assigned function keys 8. The Erase function clears the screen and return the program selection. The program selection is also returned upon depressing the quit function key.

The Plot function is shown in Figure 6A providing further selection of the subroutines Master or Current. Figure 6B shows the flow diagram for both the master and current subroutine for the function selection Plot. The subroutine is the same whether current data or master data is plotted with the data of ech of the variables loaded and plotted corresponding to each incremental position. The Cursor function flow diagram is shown in Figure 6C. A vertical line is plotted at the existing incremental position on the CRT screen upon selection of the cursor with corresponding variables for the cursor position printed on the display for either a master or current profile. The cursor position is adjustable by the operator to either the left or right of the displayed cursor position by depression of the assigned dedicated function keys for cursor left or right control. The cursor will move in increments N preferably corresponding to the assigned incremental positions N for the stroke. Accordingly, the cursor position for one trace will automatically correspond to the same incremental position for a superimposed trace. As the flow diagram indicates the cursor may only be moved to the left or right to an incremental position which satisfies the statement defining the number of N positions.

In Figure 6D the flow diagram for the function selection "Files" is shown. The operator is provided with a further choice of subroutine selections "Get Old", "Make New", or "Quit". The subroutines "Get Old" and "Make New" is illustrated in Figure 6E. The files selection "Get Old" corresponds to the selection of a master trace whereas the files selection "Make New" corresponds to the storing of current data in forming a master trace in the non-volatile memory 7. The address number for the old or new master trace in the non-volatile memory is designated by use of the numeric keypad.

The Enter/Edit Parameter Sheet program selection identified in the flow diagram for start up of the microcomputer 1 is shown in Figure 7. The microcomputer 1 is instructed to go to the numeric keypad and wait for the operator to read in the numbers corresponding to the machine in use, the part in use and the machine type. The microcomputer assigns and constructs characters used for the file name. The parameters may then be printed out on the CRT screen. The screen prompt is adjustable to the left, right or up and down. The screen prompt refers to the flashing inverse video enhancement of the location on the CRT screen which the computer is currently monitoring. The user may at any time depress Fields complete to save the File name. The parameter sheet program may also be used to print out acceptable high and low limit settings.

In the above lines it was explained that the parameters of the piston plunger or ram is defined by manual settings corresponding to the resulting profiles. Obviously it is also possible to perform the settings by the microcomputer 1 itself by comparing the master- and the current profiles within the microcomputer. Especially in highspeed die casting production lines where the cycle is up to 600/h such an automatic optimizing process performed by the computer is advantageous, since the total production line works under normal conditions without interrupting.

Additionally, it is possible to perform an "ideal" trial and error optimization, i.e. a changing of a parameter resulting in a better fitting of the current profile to the master profile is prosecuted, the next trail starts from the changed parameters, a changing of parameters which results in a worse fitting of the curves is reset, the next trial starts from the previous parameter settings.

**Claims**

1. Process for monitoring the process parameters of a molding or die casting operation for use in controlling intermittently working molding and casting devices having linear reciprocating means for intermittently transferring raw material under control of at least the pressure during operation and in which data corresponding to the position of the reciprocating means and the pressure developed by the reciprocating means are generated characterized in that the process comprises the steps of

a) dividing the stroke length of the linear reciprocating means into a predetermined number of incremental positions;

b) storing the pressure data generated at each such incremental position;

c) deriving the velocity of the reciprocating means at each incremental position and storing the derived velocity value as a function of each incremental position;

d) visually displaying the stored data corresponding to pressure and velocity as a function of the position of reciprocating means at each incremental position along its stroke length until the velocity reaches a predetermined minimum level to form a stored master visual display profile of each of such data as a function of the position of the reciprocating means;

e) repeating the sequence of steps to form a second current visual display profile of data for a second operation; and

f) comparing the second current visual display profile to the master visual display profile to analyze for parameter variations between operations.

2. Process according to claim 1, characterized further by the step of recording the time transpired in the movement of the reciprocating means along its stroke length.

3. Process according to one of the previous claims characterized further by detecting when the velocity reaches the predetermined minimum value at which time the data of pressure and velocity is stored and displayed as a function of time until the stroke length of the reciprocating means is completed such that each visual display profile is a hybrid curve of data as a function of position until the velocity is at minimum value and then is plotted as data as a function of time.

4. Process according to one of the previous claims characterized further in that temperature is recorded at each incremental position of the reciprocating means and stored for forming each visual display in conjunction with the other parameters.

5. An apparatus for performing a process according to one of the previous claims, comprising a position transducer (4, 5) measuring the stroke position of a reciprocating device and connected to a mikrocomputer (1) for processing velocity-data of the reciprocating device, memory means (7) for storing such data and graphical display means (6) for monitoring process parameters as the velocity-data characterized in that the position transducer is a velocity position transducer (4, 5) deriving the velocity of the reciprocating device at each incremental position and connected to non-volatile memory means (7) for storing one or more velocity profiles (14) of the reciprocating device as one or more master traces (14a) and that the graphical display means are CRT means displaying one of the said master traces (14a) readable back from said non-volatile memory means (7) and superposing thereon the actual velocity profile (14) measured by the velocity position transducer (4, 5) and that it further comprises a pressure transducer (2) for providing an output pressure signal corresponding to the pressure of said reciprocating device in response to stroke position and wherein said microcomputer (1) one is reading each output pressure signal in intervals corresponding to incremental distances of stroke length and for collecting each output pressure signal to form a profile of pressure as a function of stroke length until said velocity drops to below a predetermined level for continuing said profile as a function of time.

6. An apparatus according to claim 5, wherein said velocity positions transducer is a digital transducer (4) for automatically converting stroke position data into a digital format, and that the microcomputer (1) is being automatically convertible from signalling a velocity profile (14, 14a) as a function of stroke position to a velocity profile as a function of time, when the velocity drops below a predetermined level.

7. An apparatus according to claim 6, wherein said velocity position transducer is a linear potentiometer (54) having a variable wiper arm adapted to be connected to the monitored reciprocating device.

8. An apparatus according to claim 7 further comprising an interface circuit for converting the analog position represented by said variable wiper arm into digital information with said interface circuit comprising an operational amplifier (U 6), an analog to digital converter (65) and a logic gating circuit (71, 72, 73) for controlling the conversion of analog to digital data.

9. An apparatus according to claim 5 further comprising a pressure transducer circuit for converting said output pressure signal to a digital signal compatible for reading by said microcomputer.

10. An apparatus according to claim 9 further comprising means (10) for causing said pressure profile to be stored in said non-volatile memory (7) means as a master tracer thereof with said assignment means (10) providing an address location in said memory (7) for said pressure profile.

11. An apparatus according to claim 10 further comprising means for causing said pressure profile trace to be displayed upon said CRT (1) and for superimposing a master trace thereon of another pressure profile or other parameter profile.

12. An apparatus according to claim 5, further comprising a temperature transducer (3) for providing an output temperature reading of said reciprocating device in response to stroke position and wherein said microcomputer (1) is programmed to read each output temperature signal in intervals corresponding to incremental distances of stroke length and for collecting each output temperature signal to form a proifile of temperature as a function of stroke length.

13. An apparatus according to claim 12 wherein said temperature transducer (3) is a temperature thermocouple and wherein said system further comprises an interface circuit for converting the analog output of said thermocouple (3) to a digital output.

14. An apparatus according to claim 13 further comprising dedicated function means for causing said temperature profile to be stored in said non-volatile memory means (7) as a master trace thereof with said assignment means (8, 9, 10, 12) providing an address location in said memory for said temperature profile.

15. An apparatus according to claim 14 further comprising dedicated function means (8, 9, 10, 12) for causing said temperature profile trace to be displayed upon said CRT (6) and for superimposing a master trace thereon of another temperature profile or other parameter profile.

16. An apparatus according to anyone of claims 5 and 12 further comprising cursor means (16) for causing the display of a cursor upon said CRT (6) corresponding to any incremental position along the stroke of said reciprocating device and in incremental movements corresponding to said incremental distances between velocity position readings.

**Patentansprüche**

1. Verfahren zur Überwachung der Prozeßparameter eines Gieß- oder Spritzgieß-Verfahrens zur Verwndung bei der Kontrolle periodisch arbeitender Gieß- und Spritzgieß-Einrichtungen, die einen linear hin- und herbewegbaren Kolben zum periodischen Transport von Rohmaterial bei Überwachung wenigstens des Druckes während des Verfahrens besitzen, wobei die Lage des Kolbens und den durch den Kolben entwickelten Druck betreffende Daten geschaffen werden, gekennzeichnet durch folgende Verfahrensschritte:

a) Unterteilung der Hublänge des linear hin- und herbewegbaren Kolbens in eine vorbestimmte Zahl von Inkremental-Stellungen,

b) Speicherung der Druck-Daten, die bei jeder solchen Inkremental-Stellung erzeugt werden,

c) Ableitung der Geschwindigkeit des Kolbens in jeder Inkremental-Stellung und Speicherung des abgeleiteten Geschwindigkeitswertes als eine Funktion jeder Inkremental-Stellung,

d) visuelles Display der gespeicherten den Druck und die Geschwindigkeit betreffenden Daten als eine Funktion der Lage des linear hin- und herbewegbaren Kolbens in jeder Inkremental-Stellung über seine Hublänge bis die Geschwindigkeit einen vorbestimmten Minimalwert erreicht, zur Bildung eines gespeicherten visuellen Stamm-Display-Profils jedes Datensates als einer Funktion der Lage des llinear hin- und herbewegbaren Kolbens,

e) Wiederholung der Schrittfolge zur Bildung eines zweiten laufenden visuellen Display-Profils von Daten für ein zweites Verfahren, und

f) Vergleich des zweiten laufenden visuellen Display-Profils mit dem Stamm-display-Profil zur Analyse der Parameteränderungen zwischen den Operationen.

2. Verfahren nach Anspruch 1, ferner gekennzeichnet durch den Schritt der Aufnahme der Zeit, die bei der Bewegung des linear hin- und herbewegbaren Kolbens über seine Hublänge durchlaufen wird.

3. Verfahren nach einem der vorhergehenden Ansprüche, weiter gekennzeichnet durch Ermittlung des Zeitpunktes, zu dem die Geschwindigkeit einen vorbestimmten Wert erreicht, wobei zu diesem Zeitpunkt die Druck- und Geschwindigkeitsdaten gespeichert und als eine Funktion der Zeit angezeigt werden bis die Hublänge des hin- und herbewegbaren Kolbens durchschritten ist, so daß jedes visuelle Display-Profil eine Hybridkurve von Daten als eine Funktion der Lage ist, bis die Geschwindigkeit den Minimalwert erreicht hat und dann in Form von Daten als eine Funktion der zeit ausgedruckt wird.

4. Verfahren nach einem der vorhergehenden Ansprüche, dadurch gekennzeichnet, daß weiterhin die Temperatur in jeder Inkremental-Stellung des hin- und herbewegbaen Kolbens aufgenommen und zur Bildung jedes visuellen Displays in Verbindung mit den anderen Parametern gespeichert wird.

5. Vorrichtung zur Durchführung eines Verfahrens nach einem der vorhergehenden Ansprüche, umfasend einen Ortsmeßwertumfurmer (4, 5) der die Hubposition des Kolbens ißt und der mit einem Mikrocomputer (1) zur Verarbeitung der Geschwindigkeitsdaten des hi- und herbewegbaren Kolbens verbunden ist, einen Speicher (7) zur Speicherung solcher Daten und ein graphisches Display (6) zur Darstellung der Prozeßparameter wie der Geschwindigkeitsdaten, dadurch gekennzeichnet, daß der Ortsmeßwertumformer ein Geschwindigkeits-Orts-Meßwertunformer (4, 5) ist, der die Geschwindigkeit des hin- und herbewegbaren Kolbens in jeder Inkremental-Stellung ableitet und der mit einem nicht flüchtigen Speicher (7) zur Speicherung eines oder oder mehrerer Geschwindigkeitsprofile (14) des hin- und herbewegbaren Kolbens als einer oder mehrerer Stammaufzeichnungen (14a) verbunden ist und daß das graphische Display ein Bildschirmgerät ist, das eine oder mehrere Stammaufzeichnungen (14a) wiedergibt, die aus dem nicht flüchtigen Speicher (7) rücklesbar sind, und die darauf das aktuelle Geschwindigkeitsprofil (14) überlagern, das durch den Geschwindigkeits-Orts-Meßwertumformer (4, 5) gemessen ist und daß ferner ein Druckmeßwertumformer (2) zur Bereitstellung eines Ausgangsdrucksignals entsprechend dem Druck des hin- und herbwegbaren Kolbens in Abhängigkeit der Hublage vorgesehen ist, wobei der Mikrocomputer (1) jedes Ausgangsdrucksignal in Intervallen die den Inkremental-Abständen der Hublänge entsprechen, liest und jedes Ausgangsdrucksignal zur Bildung eines Profils des Druckes als einer Funktion der Hublange sammelt, bis die Geschwindigkeit unter eine vorbestimmten Wert fällt, wonach das Profil als eine Funktion der Zeit fortgesetzt wird.

6. Vorrichtung nach Anspruch 5, wobei der Geschwindigkeits-Orts-Meßwertumformer ein Digitalumformer (4) zur automatischen Umformung der Hubstellungs-Daten in eine digitale Form ist, und wobei der Mikrocomputer (1) automatisch von der Signalgebung eines Geschwindigkeitsprofils (14, 14a) als einer funktion der Hubstellung zu einem Geschwindigkeitsprofil als eine Funktion der Zeit umstellbar ist, wenn die Geschwindigkeit unter einen vorbestimmten Wert fällt.

7. Vorrichtung nach Anspruch 6, wobei der Geschwindigkeits-Orts-Meßwertumformer ein Linearpotentiometer (54) ist, der einen variablen Schieber hat, der zm Anschluß an den überwachten Kolben angepaßt ist.

8. Vorrichtung nach Anspruch 7, die zusätzlich zur Umwandlung der durch den variablen Schieber gegebenen Analogstellung in eine Digitalinformation eine Schnittstelle umfaßt, die einen Operationsverstärker (U6), einen Analog-Digital-Umwandlter (65) und eine logische Torschaltung (71, 72, 73) zur Überwachung der Umwandlung der Analog-Digital-Daten umfaßt.

9. Vorrichtung nach Anspruch 5, die zusätzlich einen Druckmeßwertumwandler zur Umwandlung des Ausgangsdrucksignals in ein digitales Signal vorgesehen ist, der zum Einlesen durch den Mikrocomputer kompatibel ist. -

10. Vorrichtung nach Anspruch 9, die zusätzlich eine Zuweisungseinrichtung (10) umfaßt, die eine Speicherung des genannten Druckprofils in dem nicht flüchtigen Speicher (7) als eine Stammaufzeichung hiervon herbeiführt und die einen aufrufbaren Speicherplatz in dem Speicher (7) für das Druckprofil bereitstellt.

11. Vorrichtung nach Anspruch 10, die zusätzlich eine Einrichtung umfaßt, die einen Display der genannten Druckprofilaufzeichnung auf dem Bildschirm (1) herbeiführt und die hierauf eine Stammaufzeichnung eines anderen Druckprofils oder anderer Parameter überlagert.

12. Vorrichtung nach Anspruch 5, zusätzlich umfassend einen Temperaturmeßwertaufnehmer (3) zur Bereitstellung einer Ausgangstemperatur-Lesung des hin- und herbewegbaren Kolbens in Abhängigkeit der Hubstellung, wobei der Mikrocomputer (1) so programmiert ist, daß er jedes Ausgangstemperatursignal in Intervallen lesen kann, die den Inkrementalabständen der Hublänge entsprechen, und zur Sammlung jedes Ausgangstemperatursignals zur Bildung eines Temperaturprofils als einer Funktion der Hublänge.

13. Vorrichtung nach Anspruch 12, wobei der Temperaturmeßwertaufnehmer (3) ein Thermoelement ist und wobei das System weiter eine Schnittstelle zur Umwandlung des Analogausganges des genannten Thermoelementes (3) in eine Digitalausgabe umfaßt.

14. Vorrichtung nach Anspruch 13, die zusätzlich ene Zuweisungseinrichtung (8, 9, 10, 12) umfaßt die eine Speicherung des Temperaturprofils in dem nicht flüchtigen Speicher (7) als einer Stammaufzeichnung darauf herbeiführt und die einen aufrufbaren Speicherplatz in dem Speicher bereitstellt.

15. Vorrichtung nach Anspruch 14, die zusätzlich eine Zuweisungseinrichtung (8, 9, 10, 12) umfaßt, die einen Display der Temperaturprofilaufzeichnung auf dem Bildschirm (6) herbeiführt und die hierauf eine Stammaufzeichnung eines anderen Temperaturprofils oder anderer Parameterprofile überlagert.

16. Vorrichtung nach einem der Ansprüche 5 oder 12, die zusätzlich einen Cursor (16) umfaßt, der einer Positionsanzeige auf dem Bildschirm (6) entsprechend einer Inkremental-Stellung entlange des Hubes des Kolbens herbeiführt und einer Einrichtung zur horizontalen Ausrichtung der Positionsanzeige in inkrementalen Bewegungen, die den Inkrementalabständen zwischen den Geschwindigkeits-Lage-Lesungen entsprechen.

**Revendications**

1. Procédé de contrôle des paramètres de processus d'une opération de moulage ou de coulée en coquille en vue d'une utilisation pour commander des dispositifs de moulage et de coulée opérant de manière intermittente possédant des moyens allant et venant linéaires pour trasnsférer par iuntermittences une maière première sous la commande d'au mons la pression durant le fonctionnement et selon lequel des données correspondant à la position des moyens allant et venant et à la pression développée par les moyens allant et venant sont générées, caractérisé en ce que le processus comporte les étapes consistant à

a) diviser la longueur de course des moyens allant et venant linéaires en un mombre prédéterminé de positions incrémentales;

b) mémoriser les données de pression générés en chaque position incrémentale;

c) extraire la vitesse des moyens allant et venant en chaque position incrémentale et mémoriser la valeur de vitesse extraite en tant que fonction de chaque position incrémentale;

d) afficher visuellement les données mémorisées correspondant à la pression et à la vitesse en tant que fonction de la position des moyens allant et venant en chaque position incrémentale le long de leur course jusqu'à ce que la vitesse alleigne un niveau minimum prédéterminé pour former un profil d'affichage visuel maître mémorisé de chaqune de ces données en tant que fonction de la position des moyens allant et venant;

e) répéter la séquence d'étapes pour former un second profil d'affichage visuel courant de données pour une seconde opération; et

f) comparer le second profil d'affichage visuel courant au profil d'affichage visuel maître pour analyser des variations de paramètres entre des opérations.

2. Procédé selon la revendication 1, caractérisé en outre par l'étape d'enregistrement du temps écoulé lors du déplacement des moyens allant et venant le long de leur course.

3. Procédé selon l'une quelconque des revendications précédentes, caractérise en outre par la détection de l'instant auquel la vitesse atteint la valeur minimum prédéterminée, instant auquel les données de pression et de vitesse sont mémorisées et affichées en fonction du temps jusqu'à achèvement de la course des moyens allant et venant de telle sorte que chaque profil d'affichage visuel soit une courbe hybride de données en fonction de la position jusqu'à ce que la vitesse soit à une valeur minimale et est ensuite tracée sous la forme de données en fonction du temps.

4. Procédé selon l'une quelconque des revendications précédentes, caractérise en outre en ce que la températur est enregistrée en chaque position incrémentale des moyens allant et venant et mémorisée pour former chaque affichage visuel conjointement avec les autres paramètres.

5. Dispositif de mise en oeuvre d'un procédé selon l'une quelconque des revendications précédentes, comportant un transducteur de position (4, 5) mesurant la position de course d'un dispositif allant et venant et relié à un microcalculateur (1) pour traiter des données de vitesse du dispositif allant et venant, des moyens de mémorire (7) pour mémoriser ces données et des moyens d'affichage graphique (6) pour contrôler des paramètres de processus en tant que données de vitesse, caractérisé en ce que le transducteur de position est un transducteur de position de vitesse (4, 5) extrayant la vitesse du dispositif allant et venant en chaque position incrémentale et relié à des moyens de mémoire non volatile (7) pour mémoriser un ou plusieurs profils de vitesse (14) du dispositif allant et venant sous la forme d'une ou de plusieurs traces maîtresses (14a) et en ce que les moyens d'affichage graphique sont des moyens à tube à rayons cathodiques affichant une desdites traces maîtresses (14a) pouvant être relue à partir desdits moyens de mémoire non volatile (7) et superposant à celle-ci le profil de vitesse réel (14) mesuré par le transducteur de position de vitesse (4, 5), et en ce qu'il comporte en outre un transducteur de pression (2) pour délivrer un signal de pression de sortie correspondant à la pression dudit dispositif allant et venant en réponse à la position de course et dans lequel ledit microcalculateur (1) est un microcalculateur lisant chaque signal de pression de sortie à des intervalles correspondant à des distances incrémentales de course et pour recueillir chaque signal de pression de sortie pour former un profil de pression en fonction de la course jusqu'à ce que ladite vitesse tombe au-dessous d'un niveau prédéterminé pour prolonger ledit profil en fonction du temps.

6. Dispositif selon la revendication 5, dans lequel ledit transducteur de postion de vitesse est un transducteur numérique (4) pour convertir automatiquement des données de position de course en un format numérique, et en ce que le microcalculateur (1) peur être automatiquement converti pour indiquer un profil de vitesse (14, 14a) en fonction d'une position de course en un profil de vitesse en fonction du temps, lorsque la vitesse tombe au-dessous d'un niveau prédéterminé.

7. Dispositif selon la revendication 6, dans lequel ledit transducteur de position de vitesse est un potentiomètre linéaire (54) ayant un bras de curseur mobile agencé pour être relié au dispositif allant et venant contrôlé.

8. Dispositif selon la revendication 7, comportant en outre un circuit d'interface pour convertir la position analogique représentée par ledit bras de curseur mobile en une information numérique, ledit circuit d'interface comportant un amplificateur opérationnel (U 6), un convertisseur analogique-numérique (65) et un circuit porte logique (71, 72, 73) pour commander la conversion de données analogiques en données numériques.

9. Dispositif selon la revendication 5, comportant en outre un circuit transducteur de pression pour convertir ledit signal de pression de sortie en un signal numérique compatible pour une lecture par ledit microcalculateur.

10. Dispositif selon la revendication 9, comportant en outre dés moyens (10) pour provoquer la mémorisation dudit profil de pression dans lesdits moyens de mémoire non volatile (7) sous la forme d'une trace maîtresse de celui-ci avec des moyens d'affectation (10) délivrant un emplacement d'adresse dans ladite mémoire (7) par ledit profil de pression.

11. Dispositif selon la revendication 10, comportant en outre des moyens pour provoquer l'affichage de ladite trace de profil de pression sur ledit tube à rayons cathodiques (1) et pour superposer à celle-ci une trace maîtresses d'une autre profil de pression ou autre profil de paramètre.

12. Dispositif selon la revendication 5, comportant en outre un tranducteur de température (3) pour délivrer une lecture de température de sortie dudit dispositif allant et venant en réponse à la position de course et dans lequel ledit microcalcultateur (1) est programmé pour lire chaque signal de température de sortie à des intervalles correspondant à des distances incrémentales de course et pour recueillir chaque signal de température de sortie pour former un profil de température en fonction de la longueur de course.

13. Dispositif selon la revendication 12, dans lequel ledit transducteur de température (3) est un thermocouple de température et dans lequel ledit système comporte en outre un circuit d'interface pour convertir la sortie analogique dudit thermocouple (3) en un signal de sortie numérique.

14. Dispositif selon la revendication 13, comportant en outre des moyens de fonction affectés pour provoquer la mémorisation dudit profil de température dans lesdits moyens de mémoire non volatile (7) sous la forme de trace maîtresse de celui-ci, lesdits moyens d'affectation (8, 9, 10, 12) délivrant un emplacement d'adresse dans ladite mémoire pour ledit profil de température.

15. Dispositif selon la revendication 14, comportant en outre des moyens de fonction affectés (8, 9, 10, 12) pour provoquer un affichage de ladite trace du profil de température sur ledit tube à rayons cathodiques (6) et pour superposer à celle-ci une trace maîtresse d'un autre profil de température ou d'un autre profil de paramètre.

16. Dispositif selon l'une quelconque des revendications 5 et 12, comportant en outre des moyens formant curseur (16) pour provoquer l'affichage d'un curseur sur ledit tube à rayons cathodiques (6) correspondant a une position incrémentale quelconque le long de la course dudit dispositif allant et venant et des moyens pour régler horizontalement l'affichage du curseur lors de mouvements incrémentaux correspondant auxdites distances incrémentales entre dees lectures de position de vitesse.

FIG. I

VELOCITY
POSITION
5

VELOCITY
POSITION
4

TEMPERATURES
3

PRESSURES

2

MICRO
COMPUTER

1

6

14

9

8

12

10

7

NON-
VOLATILE
MEMORY

MT6: V=82IN/S.   POS.=16.75IN.

LEAVE
CURSOR

FAST>
<SLOW        SLOW>
<FAST

FIG. IA

# FIG. 2

C8
33
R49
R34
R39
R48
R33
R38
30
R37
C3
R31
U3
R36
32
R35
R32
R50
R30
U2
BA  CD
R29
R52
R53
R51
R28
R51
L MN
25
26
3
41

A3
A2
+5v
Gain
CAP
IN+
IN−
ZERO
AI
A0
N
M
L

# F I G. 3

FIG. 4

START

COLLECT DATA ON NEXT

GRAPHICS

ENTER/EXIT PARAMETER

FIG. 5

GRAPHICS

PLOT

CURSOR

ERASE ⟶ CLEAR SCREEN

FILES

QUIT

RETURN

FIG. 6

PLOT

MASTER

CURRENT

QUIT ⟶ RETURN

FIG. 6A

FIG. 5A

FIG. 6B

FIG. 6C

FIG. 6D

FILES
- GET OLD
- MAKE NEW
- QUIT → RETURN

GET OLD

READ NUMERIC KEYPAD

"MT#" = NUMBER

LOAD "MT " FROM NON VOLATILE MEMORY

RETURN

FIG. 6E

MAKE NEW

READ NUMBER KEY

"MT#" = NUMBER

SAVE "MT#" IN NON VOLATILE MEMORY

RETURN

FIG. 7

ENTER/EDIT
PARAMETER SHEETS

READ MACHINE #
READ PART #          } FROM
READ MACHINE TYPE #  } NUMERIC
                       KEYPAD

"M#"=MACHINE
"P#"=PART
"D#"=MACHINE TYPE

"FILE NAME" = "M#"·"P#"·"D#"

LOAD "FILE NAME"

PRINT PARAMETERS

→SCREEN PROMPT LEFT→
→SCREEN PROMPT RIGHT→
→SCREEN PROMPT UP→
→SCREEN PROMPT DOWN→

READ NUMERIC KEYPAD

READ SCREEN PROMPT POSITION

UPDATE VARIABLE AT
SCREEN PROMPT POSITION

→FIELDS COMPLETE→

SAVE "FILENAME"

→NEW PARAMETERSHEET→

→RE-EDIT CURRENT PARAMETERSHEET→

→RETURN TO MAIN MENU→ RETURN

11